(19) Europäisches Patentamt / European Patent Office / Office européen des brevets

(11) **EP 4 576 237 A1**

(12) **EUROPEAN PATENT APPLICATION**

(43) Date of publication:
**25.06.2025 Bulletin 2025/26**

(21) Application number: **24221781.8**

(22) Date of filing: **19.12.2024**

(51) International Patent Classification (IPC):
$H01M\ 4/04^{(2006.01)}$    $H01M\ 4/131^{(2010.01)}$
$H01M\ 4/1391^{(2010.01)}$    $H01M\ 4/525^{(2010.01)}$
$H01M\ 4/62^{(2006.01)}$    $H01M\ 4/02^{(2006.01)}$

(52) Cooperative Patent Classification (CPC):
**H01M 4/131; H01M 4/0404; H01M 4/1391;
H01M 4/525; H01M 4/625;** H01M 2004/021;
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 KR 20230188664**

(71) Applicants:
• **SK On Co., Ltd.**
**Seoul 03161 (KR)**
• **SK Innovation Co., Ltd.**
**Seoul 03188 (KR)**

(72) Inventors:
• **JANG, Hyun Joong**
**Daejeon 34124 (KR)**
• **EOM, Ki Joo**
**Daejeon 34124 (KR)**
• **LEE, Hyun Ji**
**Daejeon 34124 (KR)**
• **KANG, Hyeon Soo**
**Daejeon 34124 (KR)**
• **SONG, Yeon Hwa**
**Daejeon 34124 (KR)**
• **YOON, Geon Hee**
**Daejeon 34124 (KR)**
• **CHOI, Je Nam**
**Daejeon 34124 (KR)**

(74) Representative: **Prüfer & Partner mbB
Patentanwälte · Rechtsanwälte
Sonckestraße 12
81479 München (DE)**

(54) **CATHODE FOR LITHIUM SECONDARY BATTERY, METHOD OF FABRICATING THE SAME AND LITHIUM SECONDARY BATTERY INCLUDING THE SAME**

(57) A cathode for a lithium secondary battery and a lithium secondary battery including the same are provided. The cathode includes a cathode active material layer including a cathode active material and a conductive material, and having a Raman R1 value represented by $A1_D/A1_G$ and measured on a surface of the cathode active material layer in a range from 1.5 and 4.

FIG. 3

EP 4 576 237 A1

**Description**

TECHNICAL FIELD

The embodiments of the present disclosure relate generally to a cathode for a lithium secondary battery, a method of fabricating the same and a lithium secondary battery including the same. More particularly, the embodiments relate to a cathode for a lithium secondary battery including a carbon-based material, a method of fabricating the same and a lithium secondary battery including the same.

BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of a secondary battery include a lithium secondary battery, a nickel-cadmium battery, a nickel-hydrogen battery, etc. The lithium secondary battery among the secondary batteries is being actively developed due to its high operational voltage, energy density per unit weight, high charging rate, and compact dimension.

Typically, the lithium secondary battery may include an electrode assembly including repeatedly stacked cathodes and anodes, an electrolyte solution impregnating the electrode assembly, and a case enclosing the electrode assembly. For example, the case of the lithium secondary battery may have a pouch shape for accommodating the electrode assembly and the electrolyte solution.

Recently, since the lithium secondary battery is applied to large-capacity battery applications such as electric vehicle batteries, electrode compositions or electrode structures capable of providing higher capacity and power are under research and development.

For example, a carbon-based conductive material has been proposed to be applied to the cathode for improving the electrical conductivity of the cathode. However, in the cathode/cell manufacturing process, uniform electrochemical properties may not be provided throughout the cathode/cell depending on distribution properties and crystal properties of the conductive material or of the cathode active material.

SUMMARY

According to an embodiment of the present disclosure, there is provided a cathode for a lithium secondary battery having improved capacity property and stability.

According to an embodiment of the present disclosure, there is provided a method of fabricating a cathode for a lithium secondary battery having improved capacity property and stability.

According to another embodiment of the present disclosure, there is provided a lithium secondary battery having improved capacity properties and stability.

A cathode for a lithium secondary battery includes a cathode current collector and a cathode active material layer formed on a surface of the cathode current collector. The cathode active material layer includes a cathode active material and a conductive material. A Raman R1 value represented by Equation 1 and measured on a surface of the cathode active material layer is in a range from 1.5 to 4.0.

$$\underline{\text{Equation 1}}$$

$$\text{Raman R1} = A1_D/A1_G$$

In Equation 1, $A1_D$ is a peak area for an absorption region of 1,252 cm$^{-1}$ to 1,445 cm$^{-1}$ in a Raman spectrum measured at a laser focus level of 100% using In Via Raman Microscope from Renishaw. $A1_G$ is a peak area for an absorption region of 1,577 cm$^{-1}$ to 1,620 cm$^{-1}$ in the Raman spectrum measured at a laser focus level of 100% using In Via Raman Microscope from Renishaw.

In some embodiments, the Raman R1 value may be in a range from 1.6 to 3.8.

In some embodiments, the conductive material may include at least one of carbon black and carbon nanotube.

In some embodiments, the conductive material may include carbon black having a Raman R2 value defined by Equation 2 in a range from 2.5 to 3.5.

## Equation 2

$$\text{Raman } R2 = A2_D/A2_G$$

In Equation 2, $A2_D$ is a peak area for an absorption region of 1,252 cm$^{-1}$ to 1,445 cm$^{-1}$ in a Raman spectrum measured at a laser focus level of 0% using In Via Raman Microscope from Renishaw. $A2_G$ is a peak area for an absorption region of 1,577 cm$^{-1}$ to 1,620 cm$^{-1}$ in the Raman spectrum measured at a laser focus level of 0% using In Via Raman Microscope from Renishaw.

In some embodiments, the conductive material may include carbon nanotube having a Raman R2 value defined by Equation 2 in a range from 1.8 to 2.8.

## Equation 2

$$\text{Raman } R2 = A2_D/A2_G$$

In Equation 2, $A2_D$ is a peak area for an absorption region of 1,252 cm$^{-1}$ to 1,445 cm$^{-1}$ in a Raman spectrum measured at a laser focus level of 0% using In Via Raman Microscope from Renishaw. $A2_G$ is a peak area for an absorption region of 1,577 cm$^{-1}$ to 1,620 cm$^{-1}$ in the Raman spectrum measured at a laser focus level of 0% using In Via Raman Microscope from Renishaw.

In some embodiments, the conductive material may include carbon black and carbon nanotube.

In some embodiments, a mixing weight ratio of carbon black and carbon nanotube may be in a range from 3:7 to 7:3.

In some embodiments, the cathode active material may include a lithium-nickel metal oxide containing cobalt. A molar ratio of cobalt among elements other than lithium and oxygen in the lithium-nickel metal oxide may be 0.1 or less.

In some embodiments, the cathode active material may include a lithium-nickel metal oxide in which a molar ratio of nickel among elements other than lithium and oxygen may be 0.8 or more.

In some embodiments, a content of the cathode active material may be in a range from 90 wt% to 98 wt%, and a content of the conductive material may be in a range from 0.5 wt% to 5 wt% based on a total weight of the cathode active material layer.

A lithium secondary battery includes the above-described cathode for a lithium secondary battery, and an anode facing the cathode.

In a method of fabricating a cathode for a lithium secondary battery, a preliminary solution in which a cathode binder and a conductive material are mixed is prepared. A cathode slurry is prepared by mixing a cathode active material into the preliminary solution. The cathode slurry is coated on a cathode current collector.

In some embodiments, in the preparation of the preliminary solution, a cathode binder solution and a conductive material solution may each be prepared. The cathode binder solution and the conductive material solution may be mixed.

In some embodiments, a solid content of the conductive material solution may be in a range from 4 wt% to 15 wt%.

In some embodiments, a solid content of the binder solution may be in a range from 5 wt% to 20 wt%.

In some embodiments, a solid content of the cathode slurry may be in a range from 60 wt% to 80 wt%.

In some embodiments, the coated cathode slurry may be dried and pressed to form a cathode active material layer. A Raman R1 value represented by Equation 1 and measured on a surface of the cathode active material layer is in a range from 1.5 to 4.0.

According to embodiments of the present disclosure, a cathode of a lithium secondary battery includes a carbon-based conductive material, and may have improved electrical conductivity and power properties. A cathode active material layer included in the cathode may have a Raman area ratio range measured under a specific focus level condition. In the above range, improved conductivity may be uniformly provided throughout the cathode active material layer, and stable high power properties may be implemented.

The cathode and the lithium secondary battery according to the present disclosure may be widely applied in green technology fields such as an electric vehicle, a battery charging station, a solar power generation, a wind power generation, etc., using a battery, etc. The cathode and the lithium secondary battery according to the present disclosure may be used for eco-friendly electric vehicles and hybrid vehicles to prevent climate change by suppressing air pollution and greenhouse gas emissions. etc.

BRIEF DESCRIPTION OF THE DRAWINGS

FIG. 1 is a schematic cross-sectional view illustrating a cathode for a lithium secondary battery in accordance with embodiments of the present disclosure.

FIG. 2 and FIG. 3 are schematic diagrams for describing measurement of Raman area ratio at a laser focus level 0% and a laser focus level 100%, respectively.

FIGS. 4 and 5 are flow diagrams for describing a method of fabricating a cathode for a lithium secondary battery in accordance with embodiments of the present disclosure.

FIG. 6 and FIG. 7 are a schematic plan view and a schematic cross-sectional view, respectively, illustrating a lithium secondary battery in accordance with embodiments of the present disclosure.

DETAILED DESCRIPTION

According to embodiments disclosed in the present application, a cathode for a lithium secondary battery having a Raman area ratio in a predetermined range is provided. According to embodiments of the present disclosure, a lithium secondary battery including the cathode is also provided.

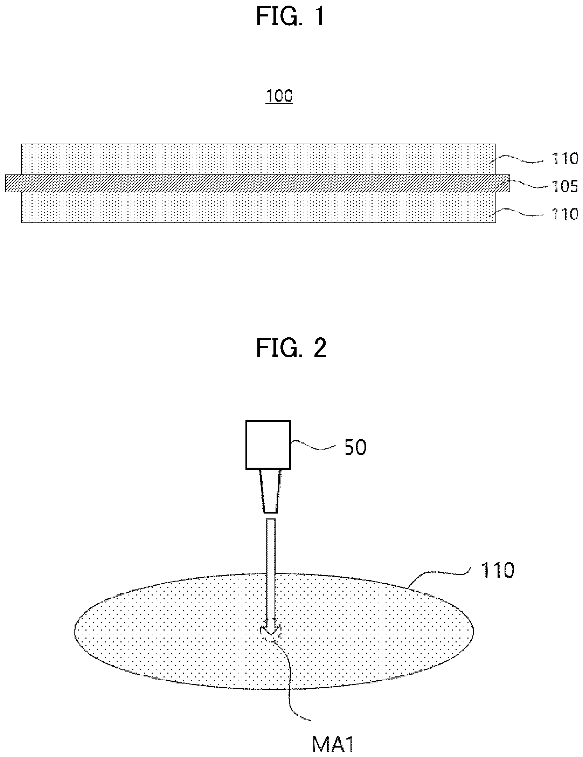

FIG. 1 is a schematic cross-sectional view illustrating a cathode for a lithium secondary battery in accordance with embodiments of the present disclosure.

Referring to FIG. 1, a cathode 100 for a lithium secondary battery (hereinafter, abbreviated a cathode) includes a cathode current collector 105 and a cathode active material layer 110.

For example, the cathode current collector 105 may include stainless steel, nickel, aluminum, titanium, or an alloy thereof. The cathode current collector may include aluminum or stainless steel surface-treated with carbon, nickel, titanium or silver. For example, a thickness of the cathode current collector 105 may be in a range from 5 $\mu$m to 50 $\mu$m.

For example, a cathode slurry may be prepared by mixing a cathode active material in a solvent. The cathode slurry may be coated on the cathode current collector 105, and then dried and pressed to prepare the cathode active material layer 110. The coating process may include any suitable method including, for example, a gravure coating, a slot die coating, a multi-layer simultaneous die coating, an imprinting, a doctor blade coating, a dip coating, a bar coating, a casting, and the like. The cathode slurry further includes a binder and a conductive material.

Non-limiting examples of the solvent used to prepare the cathode slurry may include N-methyl-2-pyrrolidone (NMP), dimethylformamide, dimethylacetamide, N, N-dimethylaminopropylamine, ethylene oxide, tetrahydrofuran, etc.

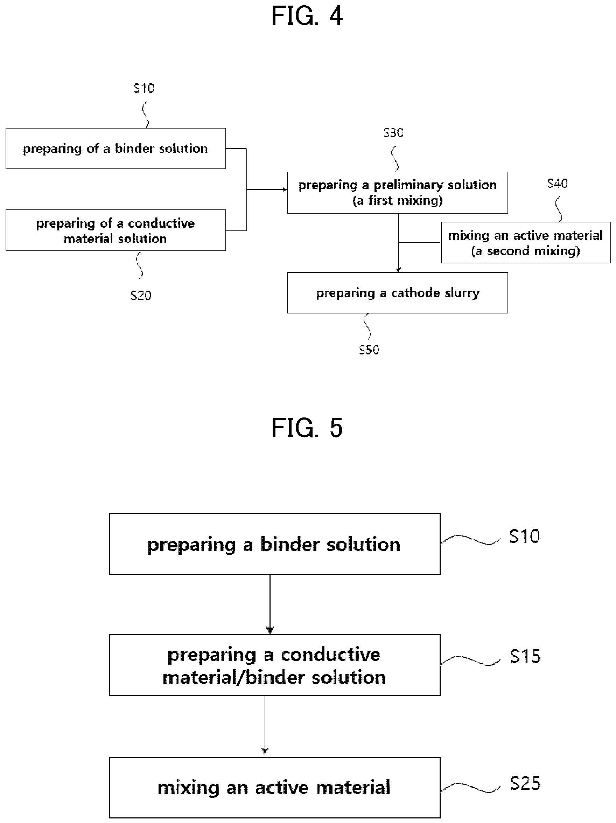

In some embodiments, the cathode slurry may be prepared by pre-dispersing the conductive material and the binder, and then mixing and stirring the cathode active material. A method of preparing the cathode slurry will be described in more detail with reference to FIGS. 4 and 5.

The cathode active material may contain a compound capable of reversibly intercalating and de-intercalating lithium ions.

In some embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Chemical Formula 1.

$$\text{Chemical Formula 1} \qquad Li_xNi_aM_bO_{2+z}$$

In Chemical Formula 1, $0.9 \leq x \leq 1.5$, $0.6 \leq a \leq 0.99$, $0.01 \leq b \leq 0.4$, and $-0.5 \leq z \leq 0.1$. As described above, M may include Co, Mn and/or Al.

The chemical structure represented by Chemical Formula 1 represents a bonding relationship included in the layered structure or the crystal structure of the cathode active material, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-nickel metal oxide particle may include a layered structure or a crystal structure represented by Chemical Formula 1-1.

Chemical Formula 1-1 $Li_xNi_aM1_{b1}M2_{b2}O_{2+z}$

In Chemical Formula 1-1, M1 may include Co, Mn and/or Al. M2 may include the above-described auxiliary element. In Chemical Formula 1-1, $0.9 \leq x \leq 1.2$, $0.6 \leq a \leq 0.99$, $0.01 \leq b1+b2 \leq 0.5$, and $-0.5 \leq z \leq 0.1$.

The cathode active material above may further include a coating element or a doping element. For example, elements substantially the same as or similar to the above-described auxiliary elements may be used as the coating element or the doping element. For example, the above-described elements may be used alone or in a combination of two or more therefrom as the coating element or the doping element.

The doping element of the coating element may be present on a surface of the lithium-nickel metal oxide particle, or may penetrate through the surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to various embodiments, life-span stability and capacity retention properties may be improved using Mn while maintaining an electrical conductivity by Co.

The content of Ni in the NCM-based lithium oxide (e.g., a mole fraction of nickel based on the total number of moles of nickel, cobalt and manganese) may be 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a Co-less active material or a Co-free active material having a reduced cobalt content. For example, a molar ratio of cobalt based on a total moles of nickel, cobalt and manganese among elements excluding lithium and oxygen in the cathode active material may be 0.2 or less, 0.1 or less, 0.09 or less, 0.08 or less, 0.06 or less, or 0.05 or less.

Even when the content of cobalt is reduced, improved conductivity may be achieved by adjusting a Raman R1 value as will be described later, and the high-Ni composition may be effectively introduced.

In some embodiments, the cathode active material may include a lithium cobalt oxide-based active material, a lithium manganese oxide-based active material, a lithium nickel oxide-based active material, or a lithium iron phosphate (LFP) active material (e.g., $LiFePO_4$).

In some embodiments, the cathode active material may include a Mn-rich active material, a Li-rich layered oxide (LLO)/OLO (Over-Lithiated Oxide)-based active material, a Co-free active material, etc., which may have a chemical structure or a crystal structure represented by Chemical Formula 2 below.

Chemical Formula 2 $p[Li_2MnO_3] \cdot (1-p)[Li_qJO_2]$

In Chemical Formula 2, $0<p<1$, $0.9 \leq q \leq 1.2$, and J may include at least one element from Mn, Ni, Co, Fe, Cr, V, Cu, Zn, Ti, Al, Mg and B.

The binder may include polyvinylidene fluoride (PVDF), vinylidene fluoride-hexafluoropropylene copolymer (poly(vinylidene fluoride-co-hexafluoropropylene)), polyacrylonitrile, polymethylmethacrylate, acrylonitrile butadiene rubber (NBR), polybutadiene rubber (BR), styrene-butadiene rubber (SBR), a polyacrylic acid-based binder, a poly(3,4-ethylenedioxythiophene, PEDOT)-based binder, etc. In some embodiments, a PVDF-based may be used as the cathode binder.

The conductive material may be added to enhance conductivity and/or mobility of lithium ions or electrons. Non-limiting examples of the conductive material may include a carbon-based conductive material such as graphite, carbon black, acetylene black, Ketjen black, graphene, a carbon nanotube, a vapor-grown carbon fiber (VGCF), a carbon fiber, and/or a metal-based conductive material such as tin, tin oxide, titanium oxide, a perovskite material such as $LaSrCoO_3$ and $LaSrMnO_3$, etc.

In some embodiments, a carbon-based conductive material may be used as the conductive material. In some embodiments, carbon black and/or the carbon nanotube (CNT) may be used as the conductive material. For example, a multi-walled carbon nanotube (MWCNT) may be used as the carbon nanotube.

In an embodiment, a mixture of carbon black and the carbon nanotube may be used as the conductive material. In this case, a mixing weight ratio of carbon black and the carbon nanotube may be in a range from 2:8 to 8:2, from 3:7 to 7:3, or from 4:6 to 6:4. In the above range, amorphous properties of carbon black and high-conductivity properties of the carbon nanotube may be balanced.

In an embodiment, graphite may be used as the conductive material.

According to embodiments of the present disclosure, a Raman R1 value defined by Equation 1 and measured on a surface of the cathode active material layer 110 is in a range from 1.5 to 4. For example, the Raman R1 value may be measured on a surface of the cathode active material layer 110 facing a surface contacting the cathode current collector 105.

## Equation 1

$$\text{Raman } R1 = A1_D/A1_G$$

In Equation 1, $A1_D$ is a peak area for an absorption area (D band) from 1,252 cm$^{-1}$ to 1,445 cm$^{-1}$ in a Raman spectrum, and $A1_G$ is a peak area for an absorption area (G band) from 1,577 cm$^{-1}$ to 1,620 cm$^{-1}$ in the Raman spectrum.

The Raman spectrum is measured under a 100% laser focus level condition using In Via Raman Microscope from Renishaw as a Raman spectrometer.

The analysis by the Raman spectrometer may be performed under conditions of a laser wavelength of 532 nm, a magnification x50, a laser power of 10%, 0.7 mV, and a laser exposure time of 10 seconds. For example, after Raman measurement is performed at a plurality of points (e.g., 3 or more, 5 or more, 10 or more) on the surface of the cathode active material layer 110, an averaged value may be used as the Raman R1 value of the corresponding cathode active material layer 110.

The cathode active material layer has the above-described Raman R1 value, so that a conductivity of the cathode active material layer 110 may be sufficiently obtained, and power properties of the secondary battery may be improved. Additionally, the amorphous properties can be controlled in the conductive material and an increase in resistance may be prevented.

Without being limited to a particular theory, when carbon black or the carbon nanotube are used as the conductive material, the increase in resistance may be suppressed in the above-described Raman R1 value range, and uniform conductivity may be effectively implemented in an entire region of the cathode active material layer 110.

In some embodiments, the Raman R1 value of the cathode active material layer 110 may be in a range from 1.6 to 3.8, from 2 to 3.5, or from 2 to 3. In the above-described Raman R1 value, capacity properties and electrical properties may be improved while maintaining the appropriate amorphous properties of the conductive material.

Further, without being limited by a specific theory, dispersion of the conductive material may be promoted to suppress decrease in pore properties in the cathode active material layer due to an over-dispersion of excessively small conductive material particles by having the above-described Raman R1 value. Thus, electrical conductivity and mobility of lithium ions may be balanced.

In some embodiments, when carbon black is used as the conductive material, a carbon black having a Raman R2 value defined Equation 2 in a range from 2.5 to 3.5 may be used. The Raman R2 value of Equation 2 may represent an intrinsic Raman R value of the conductive material.

## Equation 2

$$\text{Raman } R2 = A2_D/A2_G$$

In Equation 2, $A2_D$ is a peak area for the absorption area (D band) of 1,252 cm$^{-1}$ to 1,445 cm$^{-1}$ in the Raman spectrum, and $A2_G$ is a peak area for the absorption area (G band) of 1,577 cm$^{-1}$ to 1,620 cm$^{-1}$ in the Raman spectrum.

The Raman spectrum is measured at a laser focus level of 0% using In Via Raman Microscope from Renishaw as a Raman spectrometer. The measurement conditions except for the focus level may be substantially the same as those for the Raman R1 value measurement.

The laser focus level 100% refers to a level at which a measurement area of a single shot or a single scan of the Raman spectrometer is set to a maximum value. For example, a laser focus level 0% refers to a level at which a measurement area of a single shot or a single scan of the Raman spectrometer is set to a minimum value.

In an embodiment, the carbon black having the Raman R2 value in a range from 2.5 to 3.3, from 2.5 to 3.0, or from 2.6 to 2.9 may be used.

In some embodiments, when the carbon nanotube is used as the conductive material, the carbon nanotube having the Raman R2 value defined as Equation 2 in a range from 1.8 to 2.8 may be used. In an embodiment, the carbon nanotube having the Raman R2 value from 1.8 to 2.5, from 1.8 to 2.2, or from 1.8 to 2.0 may be used.

In some embodiments, when graphite is used as the conductive material, a graphite having the Raman R2 value defined by Equation 2 less than 1 may be used. In an embodiment, the graphite having the Raman R2 value from 0.1 to 0.8, or from 0.1 to 0.5 may be used.

The conductive material in the above-described Raman R2 value range may be used, so that the Raman R1 value may be more efficiently controlled in the above-described range, and the electrical conductivity may be effectively controlled through the conductive material.

A content of the cathode active material may be in a range from 90 wt% (weight percent) to 98 wt%, a content of the binder may be in a range from 0.5 wt% to 5 wt%, and a content of the conductive material may be in a range from 0.5 wt% to 5 wt% based on a total weight of the cathode active material layer 110.

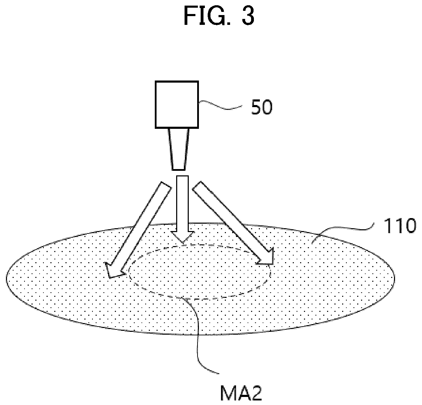

FIG. 2 and FIG. 3 are schematic diagrams for describing measurement of Raman area ratio at a laser focus level 0% and a laser focus level 100%, respectively.

Referring to FIG. 2, when the laser focus level of a Raman spectrometer 50 is 0%, a minimum area MA1 capable of being measured on the surface of the cathode active material layer 110 is set. In this case, a signal intensity obtained in the minimum area MA1 increases, and properties in a local area may be measured more precisely with high reliability.

However, if a distribution of the conductive material, the cathode active material, the binder, etc., in the cathode active material layer 110 is not uniform, a deviation in measured values may occur depending on a selected area. Additionally, properties of the selected area may only be reflected, and properties of the entire area of the cathode active material layer 110 may not be reflected.

For example, when a large amount of the conductive material and the binder is locally included in the minimum area MA1, a signal from the active material may be fluctuated or disturbed by components of the conductive material and the binder.

Referring to FIG. 3, when the laser focus level of the Raman spectrometer 50 is 100% according to embodiments of the present disclosure, a maximum area (MA2) capable of being measured on the surface of the cathode active material layer 110 is set. Thus, components and amounts of the cathode active material layer 110 included in a measurable area increase, and a Raman value reflecting compositional properties of the entire area of the cathode active material layer 110 may be obtained.

Accordingly, the above-described Raman R1 value may reflect uniformity of amorphous/crystalline properties, distribution of the conductive material and conductivity over the entire area of the cathode active material layer 110.

Thus, the Raman R1 value may be adjusted within the above-described range, so that capacity enhancement through the introduction of the high-Ni active material and conductivity enhancement through the conductive material may be achieved and confirmed uniformly over the entire area of the cathode active material layer 110.

FIGS. 4 and 5 are flow diagrams for describing a method of fabricating a cathode for a lithium secondary battery in accordance with embodiments of the present disclosure.

The above-described cathode for a lithium secondary battery is not limited to a cathode manufactured by a method described below. The method described below is provided to describe embodiments for more efficiently obtaining the Raman R1 value.

Referring to FIG. 4, in operations S10 and S20, a binder solution and a conductive material solution may be prepared respectively. The binder solution and the conductive material solution may be prepared independently.

For example, an organic binder such as PVDF may be mixed and stirred in an organic solvent such as NMP to prepare the binder solution.

In some embodiments, a rotation speed of a stirrer when forming the binder solution may be in a range from 500 rpm to 2,000 rpm, and a stirring time may be in a range from 1 hour to 5 hours. In an embodiment, the rotation speed may be adjusted in a range from 700 rpm to 1,500 rpm, and the stirring time may be adjusted in a range from 2 hours to 4 hours.

A solid content of the binder solution may be in a range from 5 wt% to 20 wt%. In an embodiment, the solid content of the binder solution may be in a range from 7 wt% to 15 wt%, or from 8 wt% to 12 wt%.

In the above stirring conditions and solid content range, deviation of the Raman R1 value and a local conductivity reduction due to the carbon component of the binder may be prevented.

As described above, the conductive material such as carbon black and/or the carbon nanotube may be mixed in an organic solvent such as NMP to prepare the conductive material solution.

In some embodiments, the conductive material solution may be formed by mixing using a mill device such as a spike mill. When forming the conductive material solution, a linear speed of the spike mill may be adjusted in a range from 5m/s to 15m/s, and a flow rate may be adjusted in a range from 1 L/min to 5 L/min. In an embodiment, the linear speed of the spike mill may be adjusted in a range from 5m/s to 12m/s, and the flow rate may be adjusted in a range from 1 L/min to 2 L/min.

A solid content of the conductive material solution may be in a range from 4 wt% to 15 wt%. In an embodiment, the solid content of the conductive material solution may be in a range from 5 wt% to 15 wt%, from 5 wt% to 12 wt%, or from 5 wt% to 10 wt%.

In an embodiment, the solid content of the conductive material solution may be less than the solid content of the binder solution. Controlling the solid content of the conductive material solution to be less than the solid content of the binder solution promotes an improved, more uniform dispersion of the conductive material between binder particles.

Moreover, the Raman R1 value in the above-described range may be easily achieved while obtaining sufficient dispersibility of the conductive material in the stirring conditions and the solid content range.

For example, in operation S30, a preliminary solution may be prepared by mixing (a first mixing) the conductive material solution and the binder solution. A solvent (e.g., NMP) may be additionally added to prepare the preliminary solution.

A rotation speed of the stirrer used in the first mixing may be in a range from 1,000 rpm to 2,000 rpm, and a stirring time may be in a range from 20 minutes to 1 hour. In an embodiment, the rotation speed may be adjusted in a range from 1,200 rpm to 1,700 rpm, and the stirring time may be adjusted in a range from 20 minutes to 40 minutes.

For example, in operations S40 and S50, a second mixing may be performed after adding a cathode active material to the preliminary solution to prepare a cathode slurry.

A rotation speed of a stirrer used in the second mixing may be in a range from 1,000 rpm to 2,000 rpm, and a stirring time may be in a range from 1 hour to 5 hours. In an embodiment, the rotation speed may be adjusted in a range from 1,200 rpm to 1,700 rpm, and the stirring time may be adjusted in a range from 1.5 hours to 4 hours.

In an embodiment, the stirring time of the second mixing may be greater than the stirring time of the first mixing. Controlling the stirring time of the second mixing to be greater than the stirring time of the first mixing promotes improved dispersibility of the cathode active material, and improved, more uniform dispersion of the conductive material between the cathode active materials.

In some embodiments, a solid content of the cathode slurry may be in a range from 60 wt% to 80 wt%. In an embodiment, the solid content of the cathode slurry may be in a range from 60 wt% to 75 wt%, or from 60 wt% to 70 wt%. In the above range, viscosity and flow properties of the cathode slurry may be adjusted to an appropriate range to prevent a local distribution deviation of the conductive material and to suppress a change in the Raman R1 value during drying and pressing processes.

Thereafter, the cathode slurry may be coated on a cathode current collector, and then dried and pressed to obtain a cathode.

Referring to FIG. 5, e.g., in operation S10, a binder solution may be prepared. Thereafter, e.g., in operation S15, a conductive material may be added to the binder solution, and then mixed to prepare a conductive material/binder solution. When preparing the conductive material/binder solution, a solvent (NMP) may be additionally added.

The conductive material/binder solution may be prepared using stirring conditions substantially the same as or similar to those for preparing the conductive material solution in operation S20 of FIG. 4.

Thereafter, in operation S25, an active material may be added to the conductive material/binder solution, and mixed to prepare a cathode slurry. The mixing may be performed under conditions substantially the same as or similar to those of the second mixing in operation S40 of FIG. 4. A solid content of the cathode slurry may be adjusted in a range substantially the same as or similar to that described with reference to FIG. 4.

As described above, after achieving sufficient dispersibility of the carbon-based material by pre-dispersing the binder solution and the conductive material solution, the cathode active material may be mixed. Additionally, the overall Raman properties and uniformity of conductive properties in the cathode active material layer may be obtained by utilizing the mixing conditions as described above.

The properties (e.g., Raman properties) of the cathode or the cathode active material layer according to embodiments of the present disclosure do not necessarily depend on the above-described preparation method and conditions. For example, the above-described Raman R1 value may be changed by other factors including types and individual physical properties of the cathode active material, the conductive material and the binder, coating conditions of the cathode active material layer, and the like.

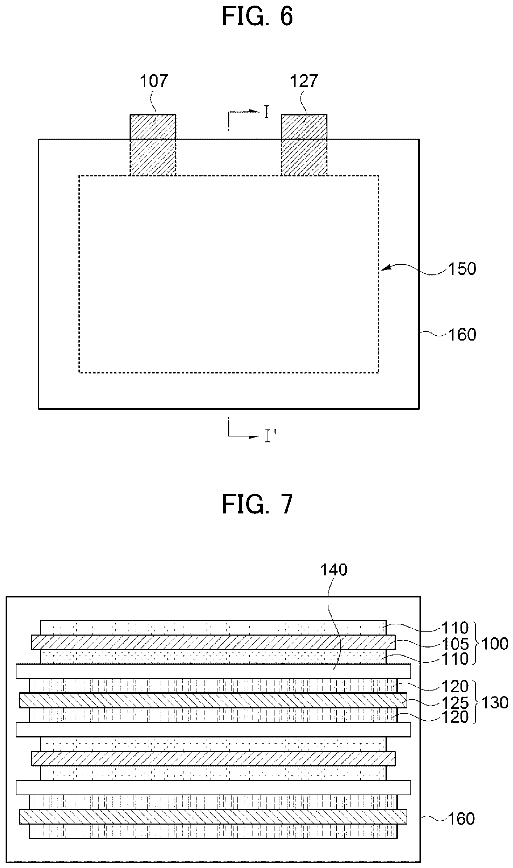

FIG. 6 and FIG. 7 are a schematic plan view and a schematic cross-sectional view, respectively, illustrating a lithium secondary battery in accordance with embodiments of the present disclosure. For example, FIG. 7 is a cross-sectional view taken along a line I-I' of FIG. 6 in a thickness direction.

Referring to FIGS. 6 and 7, a lithium secondary battery includes the cathode 100 including the cathode active material layer 110 and the cathode current collector 105 according to embodiments of the present disclosure as described above, and an anode 130. The lithium secondary battery may further include a separator 140 interposed between the cathode 100 and the anode 130.

The anode 130 may include an anode current collector 125, and an anode active material layer 120 formed by coating an anode active material on at least one surface of the anode current collector 125.

Non-limiting examples of the anode current collector 125 may include a copper foil, a nickel foil, a stainless steel foil, a titanium foil, a nickel foam, a copper foam, a polymer substrate coated with a conductive metal, and the like. A thickness of the anode current collector 125 may be, for example, in a range from 5 $\mu$m to 50 $\mu$m.

The anode active material may include a material widely known in the art capable of intercalating and de-intercalating lithium ions without a particular limitation. For example, a carbon-based material such as a crystalline carbon, an amorphous carbon, a carbon composite, a carbon fiber, a lithium metal, a lithium alloy, a silicon-containing material, or a tin-containing material may be used.

Examples of the amorphous carbon may include hard carbon, soft carbon, coke, a mesocarbon microbead (MCMB), a mesophase pitch-based carbon fiber (MPCF), and the like.

Examples of the crystalline carbon may include a graphite-based carbon such as natural graphite, artificial graphite, a graphitized coke, a graphitized MCMB, a graphitized MPCF, and the like.

The lithium metal may include pure lithium metal or a lithium metal having a protective layer formed for suppressing dendrite growth. In an embodiment, a lithium metal-containing layer deposited or coated on the anode current collector may be used as the anode active material layer. In an embodiment, a lithium thin layer may be used as the anode active material layer.

Elements included in the lithium alloy may include, for example, aluminum, zinc, bismuth, cadmium, antimony, silicon, lead, tin, gallium, indium.

The silicon-containing material may provide more increased capacity properties. The silicon-containing material may include Si, SiOx (0<x<2), a SiOx (0<x<2) doped with a metal, a silicon-carbon composite, etc. The metal may include lithium and/or magnesium, and the metal-doped SiOx (0<x<2) may include a metal silicate.

In some embodiments, an anode slurry may be prepared by mixing and stirring the anode active material above with a binder, a conductive material and/or a dispersive agent in a solvent. The anode slurry may be coated on at least one surface of the anode current collector, and then dried and pressed to prepare the anode 130.

Materials substantially the same as or similar to the binder and the conductive material included in the cathode may also be used in the fabrication of the anode. In some embodiments, a styrene-butadiene rubber (SBR)-based binder, carboxymethyl cellulose (CMC), a polyacrylic acid-based binder, a poly(3,4-ethylenedioxythiophene) (PEDOT)-based binder, etc., may be used as the anode binder.

For example, the separator 140 may include a porous polymer film or a porous non-woven fabric. The porous polymer film may include a polyolefin-based polymer such as an ethylene polymer, a propylene polymer, an ethylene/butene copolymer, an ethylene/hexene copolymer, an ethylene/methacrylate copolymer, etc. The porous non-woven fabric may include, for example, a high melting point glass fiber, a polyethylene terephthalate fiber.

The separator 140 may include a ceramic-based material. For example, inorganic particles may be coated on the polymer film or dispersed in the polymer film to improve a heat resistance.

In some embodiments, an electrode cell may be defined by the cathode 100, the anode 130 and the separator 140, and a plurality of the electrode cells may be stacked to form an electrode assembly 150 having, e.g., a jelly roll shape. For example, the electrode assembly 150 may be formed by winding, stacking, z-folding, or stack-folding of the cathode 100, the anode 130 and the separator 140.

The electrode assembly 150 may be accommodated together with an electrolyte solution in a case 160 to define the lithium secondary battery. In some embodiments, a non-aqueous electrolyte solution may be used as the electrolyte solution.

The non-aqueous electrolyte solution may include a lithium salt serving as an electrolyte and an organic solvent. The lithium salt may be represented by, e.g., $Li^+X^-$, and examples of an anion $X^-$ may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CF_3CO_2^-$, $CH_3CO_2^-$, $SCN^-$, $(CF_3CF_2SO_2)_2N^-$, and the like.

For example, the organic solvent may include propylene carbonate (PC), ethylene carbonate (EC), diethyl carbonate (DEC), dimethyl carbonate (DMC), ethyl methyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, etc. These may be used alone or in a combination of two or more therefrom.

In some embodiments, a solid electrolyte may be used instead of the non-aqueous electrolyte solution described above. In this case, the lithium secondary battery may be fabricated in the form of an all-solid-state battery. Additionally, a solid electrolyte layer may be disposed between the cathode 100 and the anode 130 instead of the above-described separator 140.

The solid electrolyte may include a sulfide-based electrolyte. Non-limiting examples of the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, and Z is Ge, Zn or Ga), $Li_2S-GeS_2$, $Li_2S-SiS_2-Li_3PO_4$, $Li_2S-SiS_2-Li_pMO_q$, (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in a combination of two or more therefrom.

In an embodiment, the solid electrolyte may include, e.g., an oxide-based amorphous solid electrolyte such as $Li_2O-B_2O_3-P_2O_5$, $Li_2O-SiO_2$, $Li_2O-B_2O_3$, $Li_2O-B_2O_3-ZnO$, etc.

As illustrated in FIG. 6, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

In FIG. 6, the cathode lead 107 and the anode lead 127 are illustrated as protruding from an upper side of the case 160 in a plan view, but the positions of the electrode leads are not limited as illustrated in FIG. 6. For example, the electrode leads may protrude from at least one of both lateral sides of the case 160, and may also protrude from a lower side of the case 160. Alternatively, the cathode lead 107 and the anode lead 127 may be formed to protrude from different sides of the case 160.

The lithium secondary battery may be manufactured in, e.g., a cylindrical shape using a can, a prismatic shape, a pouch shape or a coin shape.

Example 1

Fabrication of a cathode

1) Preparation of a binder solution

A PVDF powder was mixed with an NMP solvent and stirred at a speed of 1,000 rpm for 3 hours to prepare a binder solution having a solid content of 10 wt%.

2) Preparation of a conductive material solution

A carbon black powder having a Raman R2 value of 2.8 was mixed in an NMP solvent using a spike mill at a linear speed of 8m/s and a flow rate of 2L/min to form a conductive material solution having a solid content of 6 wt%.

3) Preparation of a cathode slurry

$LiNi_{0.8}Mn_{0.1}Co_{0.1}O_2$ particles as a cathode active material were mixed with the binder solution and the conductive material solution to prepare a cathode slurry having a solid content of 65 wt%. A weight ratio of the cathode active material, the conductive material (carbon black) and the binder (PVDF) was adjusted to 96.5:2:1.5.

Specifically, the conductive material solution and the binder solution were stirred (a first mixing) in an additional NMP solvent for 30 minutes at a speed of 1,500 rpm to obtain a preliminary solution (also referred to as a first solution).

Thereafter, the cathode active material was added to the first solution and stirred (a second mixing) at a speed of 1,500 rpm for 2 hours to prepare the cathode slurry.

The cathode slurry was coated on an aluminum foil, dried and pressed to obtain a cathode.

Fabrication of a secondary battery

An anode slurry including 93 wt% of natural graphite as an anode active material, 5 wt% of KS6 as a flake-type conductive material, 1 wt% of styrene-butadiene rubber (SBR) as a binder, and 1 wt% of carboxymethyl cellulose (CMC) as a thickener was prepared. KS6 is a conductive synthetic graphite available by TIMCAL a subsidiary of Imerys Graphite & Carbon Canada Inc. The anode slurry was coated, dried and pressed on a copper substrate to prepare an anode.

The cathode and the anode prepared as described above were notched in a predetermined size, stacked with a separator (polyethylene, thickness: 15 μm) interposed therebetween to form an electrode cell, and then the tab portions of the cathode and the anode were welded. The welded cathode/separator/anode assembly was put into a pouch, and three sides were sealed except for an electrolyte injection side. A region including the electrode tab was included in the sealing portion.

An electrolyte solution was injected through the electrolyte injection side, the electrolyte injection side was also sealed, and then impregnated for 12 hours or more. Thereafter, formation charging and discharging were performed (charging conditions: CC-CV, 0.25C, 4.2V, 0.05C, CUT-OFF; discharging conditions: CC, 0.25C, 2.5V, CUT-OFF). The term impregnated as used here refers to the process by which the electrolyte solution is absorbed and thoroughly saturates the cathode/separator/anode assembly. Thereafter, formation charging and discharging were performed (charging conditions: CC-CV (constant current-constant voltage), 0.25C, 4.2V, 0.05C, CUT-OFF; discharging conditions: CC, 0.25C, 2.5V, CUT-OFF). More specifically, the battery is first charged at a constant current until it reaches a constant voltage of 4.2 V, then the charging switches to constant voltage mode while the current gradually decreases. The constant current rate is set at 0.25 times the battery's capacity (C). 0.05 C is the cut-off current below which the charging process is terminated. The battery is discharged at a constant current of 0.25 C and 2.5 V is the cut-off voltage below which the discharging is terminated. The charging and discharging may be repeated as needed.

In the preparation of the electrolyte solution, a 1M $LiPF_6$ solution was prepared by using a mixed solvent of EC/EMC (30/70; volume ratio), and 1 wt% of vinylene carbonate (VC), 0.5 wt% of 1,3-propensultone (PRS) and 0.5 wt% of lithium bis(oxalato)borate (LiBOB) were added as an electrolyte.

### Example 2

A cathode and a secondary battery were manufactured by the same method as that in Example 1, except that carbon nanotube (CNT) (MWCNT, i.e., multi-walled carbon nanotube having a Raman R2 of 1.9) was used as a conductive material instead of carbon black and a weight ratio of the cathode active material, the conductive material and the binder in the cathode slurry was changed to 98:0.5:1.5.

### Example 3

A cathode and a secondary battery were manufactured by the same method as that in Example 1, except that a mixture of carbon black and CNT (the same CNT as in Example 2) in a weight ratio of 1:1 was used as a conductive material, and the weight ratio of the cathode active material, CNT, carbon black and PVDF was adjusted to 97.5:0.5:0.5:1.5.

### Example 4

A cathode and a secondary battery were manufactured by the same method as that in Example 1, except that a linear speed of the spike mill was changed to 10 m/s when preparing the conductive material solution.

### Example 5

A cathode and a secondary battery were manufactured by the same method as that in Example 1, except that a linear speed of the spike mill was changed to 6 m/s when preparing the conductive material solution.

### Example 6

A cathode and a secondary battery were manufactured by the same method as that in Example 1, except that a linear speed of the spike mill was changed to 10 m/s when preparing the conductive material solution, and stirring speeds of the first mixing and the second mixing were each changed to 2,000 rpm when preparing the cathode slurry.

### Example 7

A binder solution was prepared by the same method as that in Example 1. A conductive material/binder solution having a solid content of 6 wt% was prepared by mixing the binder solution, the same carbon black as that in Example 1 and NMP under the same spike mill condition as those in Example 1.

The same cathode active material as that in Example 1 was mixed with additional NMP in the conductive material/binder solution and stirred at a speed of 1500 rpm for 2 hours to prepare a cathode slurry having the same solid content and weight ratio of the active material, the conductive material and the binder as those in Example 1.

A secondary battery was manufactured by the same method as that in Example 1 using the cathode slurry.

### Comparative Example 1

A cathode active material and carbon black were added to the conductive material solution prepared in Example 1, and then stirred at a speed of 1500 rpm for 2 hours to prepare a cathode slurry having the same solid content and weight ratio of the active material, the conductive material and the binder as those in Example 1.

A secondary battery was manufactured by the same method as that in Example 1 using the cathode slurry.

### Comparative Example 2

A conductive material solution and a binder solution were prepared by the same method as that in Example 1.

The conductive material solution and the binder solution were mixed with the same cathode active material as that in Example 1, and then stirred at a speed of 1500 rpm for 2 hours to prepare a cathode slurry having the same solid content and weight ratio of the active material, the conductive material and the binder as those in Example 1.

A secondary battery was manufactured by the same method as that in Example 1 using the cathode slurry.

Comparative Example 3

A cathode slurry having the same solid content and weight ratio of the active material, the conductive material and the binder as those in Example 1 was prepared, except that the flow rate in the spike mill was changed to 0.5 L/min during the preparation of the conductive material solution.

A secondary battery was manufactured by the same method as that in Example 1 using the cathode slurry.

Comparative Example 4

A cathode and a secondary battery were manufactured by the same method as that in Example 1, except that the solid content of the conductive material solution was changed to 3 wt%.

Comparative Example 5

A cathode and a secondary battery were manufactured by the same method as that in Example 1, except that the solid content of the conductive material solution was changed to 18 wt%.

Comparative Example 6

A cathode and a secondary battery were manufactured by the same method as that in Example 1, except that the solid content of the cathode slurry was changed to 50 wt%.

Experimental Example

(1) Measurement of Raman R1 value

A Raman R1 value defined by Equation 1 was measured from a surface of the cathode active material layer of the lithium secondary battery prepared as described above after the formation charge/discharge under the following conditions. Specifically, three regions on the surface of the cathode active material layer were selected, and the Raman R1 value was obtained as an average of the corresponding values.

 i) Raman spectrometer: inVia Raman Microscope, Renishaw (UK)
 ii) Laser focus level: 100%
 ii) Argon ion laser light wavelength: 532 nm
 iii) Exposure time: 10 seconds, mapping count: 10 times
 iv) Magnification: x50
 v) Laser power: 10%, 0.7mV
 vi) grating: 1800 l/min
 vii) software: Resolutions Pro (Data Processing)

(2) DC-IR measurement

A lithium secondary battery of each of Examples and Comparative Examples was discharged at a C-rate of 1 C at 50% of a state of charge (SOC) for 10 seconds. A slope was adopted as a DCIR by constructing an initial voltage and an end point of a voltage as an equation of a straight line.

(3) Evaluation of 2C discharge capacity efficiency

The 2C discharge capacity efficiency of each lithium secondary battery of Examples and Comparative Examples was evaluated by calculating a ratio of a 2C discharge capacity to a 0.3C discharge capacity as a percentage.

Table 1

|  | Raman R1 ($A1_D/A1_G$) | DC-IR (m$\Omega$) | 2C discharge efficiency (%) |
|---|---|---|---|
| Example 1 | 3.2 | 1.21 | 77 |

(continued)

|  | Raman R1 (A1$_D$/A1$_G$) | DC-IR (mΩ) | 2C discharge efficiency (%) |
|---|---|---|---|
| Example 2 | 2.2 | 1.18 | 85 |
| Example 3 | 2.0 | 1.16 | 83 |
| Example 4 | 3.5 | 1.21 | 76 |
| Example 5 | 1.6 | 1.31 | 72 |
| Example 6 | 3.8 | 1.25 | 74 |
| Example 7 | 2.2 | 1.29 | 85 |
| Comparative Example 1 | 0.8 | 3.3 | 61 |
| Comparative Example 2 | 1.4 | 2.8 | 65 |
| Comparative Example 3 | 4.8 | 2.4 | 58 |
| Comparative Example 4 | 5.2 | 2.6 | 55 |
| Comparative Example 5 | 1.2 | 2.5 | 63 |
| Comparative Example 6 | 4.8 | 2.5 | 56 |

Referring to Table 1, a low DC-IR value was obtained and the electrical conductivity and discharge efficiency were improved in Examples satisfying the range of the above-described Raman R1 value.

In Comparative Examples, the same conductive material having the same Raman R2 value as that in Examples was used. However, the R1 value was less than 1.5 or more than 4, and a local conductivity/resistance deviation of the cathode active material layer occurred, thereby degrading the DC-IR property and discharging efficiency.

**Claims**

1. A cathode for a lithium secondary battery, comprising:

    a cathode current collector; and
    a cathode active material layer formed on a surface of the cathode current collector, the cathode active material layer comprising a cathode active material and a conductive material,
    wherein a Raman R1 value represented by Equation 1 and measured on a surface of the cathode active material layer is in a range from 1.5 to 4.0:

$$\text{Equation 1}$$

$$\text{Raman R1} = A1_D/A1_G$$

    wherein, in Equation 1, A1$_D$ is a peak area for an absorption region of 1,252 cm$^{-1}$ to 1,445 cm$^{-1}$ in a Raman spectrum measured at a laser focus level of 100% using In Via Raman Microscope from Renishaw, and A1$_G$ is a peak area for an absorption region of 1,577 cm$^{-1}$ to 1,620 cm$^{-1}$ in the Raman spectrum measured at a laser focus level of 100% using In Via Raman Microscope from Renishaw.

2. The cathode for a lithium secondary battery according to any one claim 1, wherein the Raman R1 value is in a range from 1.6 to 3.8.

3. The cathode for a lithium secondary battery according to any one of claims 1 and 2, wherein the conductive material comprises at least one of carbon black and carbon nanotube.

4. The cathode for a lithium secondary battery according to any one of claims 1 to 3, wherein the conductive material comprises carbon black having a Raman R2 value defined by Equation 2 in a range from 2.5 to 3.5:

Equation 2

$$\text{Raman R2} = A2_D/A2_G$$

wherein, in Equation 2, $A2_D$ is a peak area for an absorption region of 1,252 cm$^{-1}$ to 1,445 cm$^{-1}$ in a Raman spectrum measured at a laser focus level of 0% using In Via Raman Microscope from Renishaw, and $A2_G$ is a peak area for an absorption region of 1,577 cm$^{-1}$ to 1,620 cm$^{-1}$ in the Raman spectrum measured at a laser focus level of 0% using In Via Raman Microscope from Renishaw.

5. The cathode for a lithium secondary battery according to any one of claims 1 to 4, wherein the conductive material comprises carbon nanotube having a Raman R2 value defined by Equation 2 in a range from 1.8 to 2.8:

Equation 2

$$\text{Raman R2} = A2_D/A2_G$$

wherein, in Equation 2, $A2_D$ is a peak area for an absorption region of 1,252 cm$^{-1}$ to 1,445 cm$^{-1}$ in a Raman spectrum measured at a laser focus level of 0% using In Via Raman Microscope from Renishaw, and $A2_G$ is a peak area for an absorption region of 1,577 cm$^{-1}$ to 1,620 cm$^{-1}$ in the Raman spectrum measured at a laser focus level of 0% using In Via Raman Microscope from Renishaw.

6. The cathode for a lithium secondary battery according to any one of claims 1 to 5, wherein the conductive material comprises carbon black and carbon nanotube.

7. The cathode for a lithium secondary battery according to claim 6, wherein a mixing weight ratio of carbon black and carbon nanotube is in a range from 3:7 to 7:3.

8. The cathode for a lithium secondary battery according to any one of claims 1 to 7, wherein the cathode active material comprises a lithium-nickel metal oxide containing cobalt, and a molar ratio of cobalt among elements other than lithium and oxygen in the lithium-nickel metal oxide is 0.1 or less.

9. The cathode for a lithium secondary battery according to any one of claims 1 to 8, wherein the cathode active material comprises a lithium-nickel metal oxide in which a molar ratio of nickel among elements other than lithium and oxygen is 0.8 or more.

10. The cathode for a lithium secondary battery according to any one of claims 1 to 9, wherein a content of the cathode active material is in a range from 90 wt% to 98 wt%, and a content of the conductive material is in a range from 0.5 wt% to 5 wt% based on a total weight of the cathode active material layer.

11. A lithium secondary battery, comprising:

the cathode for a lithium secondary battery according to any one of claims 1 to 10; and
an anode facing the cathode.

12. A method of fabricating a cathode for a lithium secondary battery, the method comprising:

preparing a preliminary solution in which a cathode binder and a conductive material are mixed;
preparing a cathode slurry by mixing a cathode active material into the preliminary solution; and
coating the cathode slurry on a cathode current collector.

13. The method of claim 12, wherein preparing the preliminary solution comprises:

preparing a cathode binder solution and a conductive material solution; and
mixing the cathode binder solution and the conductive material solution.

14. The method according to claim 13, wherein a solid content of the conductive material solution is in a range from 4 wt% to 15 wt%.

15. The method according to any one of claims 12 to 14, wherein a solid content of the cathode slurry is in a range from 60 wt% to 80 wt%.

# FIG. 1

<u>100</u>

110
105
110

# FIG. 2

50

110

MA1

# FIG. 3

50

110

MA2

# FIG. 4

S10

preparing of a binder solution

preparing of a conductive
material solution

S20

S30

preparing a preliminary solution
(a first mixing)

S40

mixing an active material
(a second mixing)

preparing a cathode slurry

S50

# FIG. 5

preparing a binder solution — S10

preparing a conductive
material/binder solution — S15

mixing an active material — S25

# FIG. 6

# FIG. 7

Europäisches
Patentamt

European
Patent Office

Office européen
des brevets

# EUROPEAN SEARCH REPORT

**Application Number**

EP 24 22 1781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/248968 A1 (SEMICONDUCTOR ENERGY LAB [JP]) 1 December 2022 (2022-12-01) * abstract * & US 2024/258497 A1 (YAMAZAKI SHUNPEI [JP] ET AL) 1 August 2024 (2024-08-01) * figure 8B * | 12-15 | INV. H01M4/04 H01M4/131 H01M4/1391 H01M4/525 H01M4/62 |
| A | US 2021/408544 A1 (SUN REN-DE [JP] ET AL) 30 December 2021 (2021-12-30) * examples 1, 2 * | 1-11 | ADD. H01M4/02 |
| A | US 10 243 215 B2 (TDK CORP [JP]) 26 March 2019 (2019-03-26) * tables 1-5 * | 1-12 | |

TECHNICAL FIELDS
SEARCHED      (IPC)

H01M

The present search report has been drawn up for all claims

| Place of search | Date of completion of the search | Examiner |
|---|---|---|
| Munich | 23 April 2025 | Koessler, Jean-Luc |

EPO FORM 1503 03.82 (P04C01)

## ANNEX TO THE EUROPEAN SEARCH REPORT
## ON EUROPEAN PATENT APPLICATION NO.

EP 24 22 1781

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2025

| Patent document cited in search report | Publication date | Patent family member(s) | | Publication date |
|---|---|---|---|---|
| WO 2022248968 A1 | 01-12-2022 | DE | 112022002815 T5 | 07-03-2024 |
| | | JP | WO2022248968 A1 | 01-12-2022 |
| | | KR | 20240015086 A | 02-02-2024 |
| | | US | 2024258497 A1 | 01-08-2024 |
| | | WO | 2022248968 A1 | 01-12-2022 |
| US 2021408544 A1 | 30-12-2021 | CN | 112956050 A | 11-06-2021 |
| | | EP | 3886216 A1 | 29-09-2021 |
| | | JP | 7397788 B2 | 13-12-2023 |
| | | JP | WO2020105695 A1 | 07-10-2021 |
| | | TW | 202030913 A | 16-08-2020 |
| | | US | 2021408544 A1 | 30-12-2021 |
| | | WO | 2020105695 A1 | 28-05-2020 |
| US 10243215 B2 | 26-03-2019 | CN | 106025191 A | 12-10-2016 |
| | | US | 2016285102 A1 | 29-09-2016 |

EPO FORM P0459

For more details about this annex : see Official Journal of the European Patent Office, No. 12/82